# EUROPEAN PATENT APPLICATION

(11) **EP 1 338 506 A1**
(43) Date of publication of application: **27.08.2003**
(21) Application number: 02003556.4
(22) Date of filing: 15.02.2002
(51) Int. Cl.: B64C 9/22, B64C 13/24, B64C 9/12, B64C 3/50

(54) **Airplane wing with slat and Krueger flap**

(71) Applicant: Fairchild Dornier GmbH, 82234 Wessling (DE)
(72) Inventor: Rudolph, Peter, 81479 München (DE); Müller, Josef, 82234 Wessling (DE); Gresty, David, 82234 Wessling (DE); Schallert, Christian, 82234 Wessling (DE)
(74) Representative: Schweighart, Peter

(57) **Abstract**

The present invention relates to an airplane wing (1) with leading edge devices, said leading edge devices comprising one or more slats (12) and at least one Krueger flap (13) per side. Said one or more slats (12) and said at least one Krueger flap (13) are driven by a common power drive unit (21) through a common shaft system (22) between a normal flight position (a hold/descent position), a take-off position and a landing position. The incompatibility of the flap sequence between slat (12) and Krueger (13) is overcome by using an over center drive arrangement in the Krueger actuation (20).

## Description

The present invention relates to an airplane wing with at least one slat and at least one Krueger flap.

Small size airplanes, i.e. for 50 to approximately 120 people, with low wings and twin engines have an inherent problem with the installation of the engines underneath the wings. Often or even preferably engines with a high bypass flow ratio are used. The size of the engines and their installation elements, such as accessories, thrust reverser, blade containment and the like, do not quite scale down with airplane size. Thus, the engine nacelles are proportionally larger on smaller airplanes than engine nacelles on larger airplanes.

In order to keep the landing gear short and to simultaneously maintain engine nacelle ground clearance, the engines are installed in close proximity to the lower surface of the respective wing. In order to achieve good high lift performance for take-off and landing, the leading edge devices need to be designed with the smallest possible lateral gaps relative to the engine strut. This is particularly critical on the inboard side of the engine strut, where a premature separation of the inboard wing jeopardizes the low speed maximum lift of the wing.

The close proximity of the engine nacelle to the lower surface of the wing precludes known solutions, such as having a continuous slat across the engine strut, like in the Airbus models A300/310 or to tailor the engine strut to match the slat motion, such as in the Airbus models A320, A330/340. The close coupled engine nacelle just causes the deployed inboard slat to physically interfere with the engine nacelle. If the engine nacelle is far enough forward, the inboard slats would extend into the engine jet, which is also unacceptable.

Boeing solved this problem on the 737-300, -400, -500 model airplanes by using folding bullnose Krueger flaps between the engine nacelle and the side of the body. The Krueger flaps can be tailored to seal against both the engine strut as well as the upper surface of the engine nacelle. The folding bullnose is trimmed back or deleted above the nacelle to avoid interference and the Krueger panel is tailored to seal with or come in close proximity to the nacelle upper surface. The seal against the side of the body is not better than that of a slat, but does not seem to be as important for the high lift performance as the leading edge-to-engine and the leading edge-to-engine strut seal.

The Boeing 737 airplanes evolved from 727 airplane technology and use single linear hydraulic actuators to deploy each of the leading edge slat segments and two linear actuators for each of the inboard Krueger flaps. The motion of the leading edge devices is even sequenced to reduce the demand for hydraulic power. A side to side synchronization is achieved with electric signaling of the position. The "New Generation" 737-600 to -900 model airplanes use this actuation as well to allow for an easier certification under the "Grand Father Clause".

New airplanes will have to be certified under more stringent requirements as far as maintaining a symmetric high lift configuration is concerned. It may be possible to certify an airplane with mechanically and electrically synchronized outboard slats and only electrically synchronized inboard Krueger flaps using dual linear actuators on the inboard Krueger flaps. But there is a severe penalty in certified airplane performance due to the possibility of asymmetry. It is therefore highly desirable to synchronize the Krueger flaps mechanically as well, from side to side, and with the outboard slats. The slats generally deploy on circular arc tracks. When using a rack and pinion actuation for the slats, which is the most favored actuation system, a slat deployment angle is directly proportional to the percentage motion of the drive system. Looking inboard on the left hand wing the slats rotate in a counter-clockwise direction.

A Krueger flap rotates in a clockwise direction when looking at it from the same plane and direction. Therefore, the motions of the slats and the Krueger flap seem to be incompatible for a synchronized common actuation system. To illustrate this incompatibility further, the various slat and Krueger positions are compared as follows. The best position for good take-off lift to drag ratio for the outboard slats is 12° to 20° of deflection, and for best maximum lift somewhere between 25° and 30°. This means that the slat has its take-off position at around 60% and the landing position at 100% rotation. An inboard Krueger has its best take-off performance at Krueger chord angles of say 65° and best landing performance chord angle at say 75°, which relates to a Krueger panel rotation angles of 85° to 75°, respectively. In contrast to the slat the Krueger reaches its take-off position at about 100% of the Krueger panel rotation and the landing position at about 88%. It is this incompatibility of motion that has prevented so far the use of a mechanically synchronized common drive system for slats and Krueger flaps employed on the same aircraft wing.

As mentioned earlier, individual linear hydraulic actuators for slat and Krueger flaps avoid this synchronization problem (737 solution). However, this configuration is probably not certifiable under today's more stringent safety rules for the prevention of asymmetric high lift situations. The solution actuating the slats from a centrally located power drive unit and to actuate each of the two inboard Krueger flaps with two linear hydraulic actuators each may be marginally acceptable, but needs fairly complex feedback and control systems. The most complex solution to drive slats and Krueger flaps is to have two separate centrally located power drive units one driving the slats and a second driving the Krueger flaps. This will certainly prevent asymmetry problems, but is the most expensive and heavy solution.

The object of the present invention is therefore to provide an airplane wing with leading edge devices, said leading edge devices comprising at least one slat and at least one Krueger flap per side which are driven by one centrally located actuation in a way that asymmetric high lift situations are avoided.

The above object is achieved by an airplane wing according to claim 1, comprising leading edge devices, said leading edge devices comprising one or more slats and at least one Krueger flap per side, whereby said one or more slats and said at least one Krueger flap per side are driven by a common drive unit between a normal flight position, a take-off position and a landing position. Hereby, a flap drive mechanism connects the Krueger flap and the common drive unit so that upon actuation of the drive unit said Krueger flap, when starting from said normal flight position, goes through said take-off position before reaching said landing position.

Thus, in order to allow to drive the slats and the Krueger flaps from a common central actuation system to achieve mechanically synchronized symmetrical motion, the take-off and landing positions of the Krueger flap have to be reversed. This is accomplished by letting the Krueger flap go from the normal flight position or cruise position through the take-off position into the landing position. Hereby, asymmetric high lift situations can be prevented while at the same time the extra weight and cost of a dual actuation system is avoided.

Further advantageously, one Krueger flap is provided inboard from an engine strut and two or more slats are provided outboards from said engine strut.

The Krueger flap is rotatably connected to the airplane wing by means of two or more Krueger hinge fittings located on a leading edge rib. Hereby, the flap drive mechanism advantageously comprises a drive arm connected to a rotary actuator and a drive link hinged to the drive arm and to the Krueger hinge fitting. In this way, something like a knee or toggle link drive can be realized.

Advantageously, the Krueger flap, shortly before or after that take-off position, goes through a dead center position with a maximum panel rotation angle before reaching the landing position. In that dead center position, the rotation axis of said rotary actuator , the joint of the drive arm and the drive link and the joint of said drive link with said Krueger hinge fitting lie on a straight line.

Further, the Krueger flap comprises a foldable bullnose which is in a folded position during said normal flight position of the Krueger flap (cruise). The bullnose is attached to the aft end of the Krueger by means of hinges in at least. two spanwise locations. The rotation of the bull-nose relative to the Krueger panel is controlled by a slave link mechanism. Hereby, the slave drive mechanism advantageously actuates the bull-nose so that the positions of the bull-nose relative to the Krueger panel are the same for take-off and landing.

The simplest mechanism is one that coincides spanwise with the Krueger actuation and connects an extension of the drive link to the bullnose with a bullnose slave link. The slave linkage geometry is chosen such that the upper surfaces of the bullnose and Krueger panel form a smooth aerodynamic contour during any number of take-off and landing positions.

A second and more complex slave linkage is provided that is not tied to the actuation location, but connects the bullnose with the fixed leading edge structure. Hereby, said slave drive mechanism actuates said bullnose so that the position of said bullnose remains essentially unchanged when the Krueger flap is moved from the take-off position into the landing position. Said slave drive mechanism advantageously comprises an upper link hinged to the airplane wing and lower link hinged to the bullnose, said upper link and said lower link also being hinged to a bell crank which itself is hinged to said Krueger flap. Hereby, said bell crank advantageously comprises a first arm and a second arm forming an angle.

The airplane wing according to the present invention is particularly advantageous for a smaller size airplane, i.e. for 50 to 120 persons, with low wings and twin engines.

The present invention is further explained in the following description by means of a preferred embodiment in relation to enclosed drawings, in which
Fig. 1 shows a schematic top view of an airplane wing according to the present invention,
Fig. 2 shows a cross section of a slat of an airplane wing according to the present invention. This slat design matches the sequences of the second Krueger concept, defined in Figs. 4 through 11.
Fig. 3 shows a composite cross section of a first Krueger flap in 4 positions, using a simple bullnose slave linkage,
Fig. 4 shows a cross section of a second Krueger flap of an airplane wing according to the present invention in its stowed (cruise) position, whereby the Krueger panel drive mechanism is shown,
Fig. 5 shows a cross section according to Fig. 4, whereby the Krueger flap is in a "hold/descent" position.
Fig. 6 shows a cross section according to Fig. 4, whereby the Krueger flap is in a take-off position.
Fig. 7 shows a cross section according to Fig. 4, whereby the Krueger flap is in a landing position.
Fig. 8 shows the cross section of a Krueger flap according to the present invention, whereby a slave drive mechanism of a second kind for the bullnose of the Krueger flap is shown and the Krueger flap is in a normal (cruise) flight condition.
Fig. 9 shows a cross section according to Fig. 8, whereby the Krueger flap is in a "hold/descent" position.
Fig. 10 shows a cross section according to Fig. 8, whereby the Krueger flap is in a take-off position, and
Fig. 11 shows a cross section according to Fig. 8, whereby the Krueger flap is in a landing position.
Fig. 12 shows a pictorial summary of the movement of the slat and Krueger flap configurations.

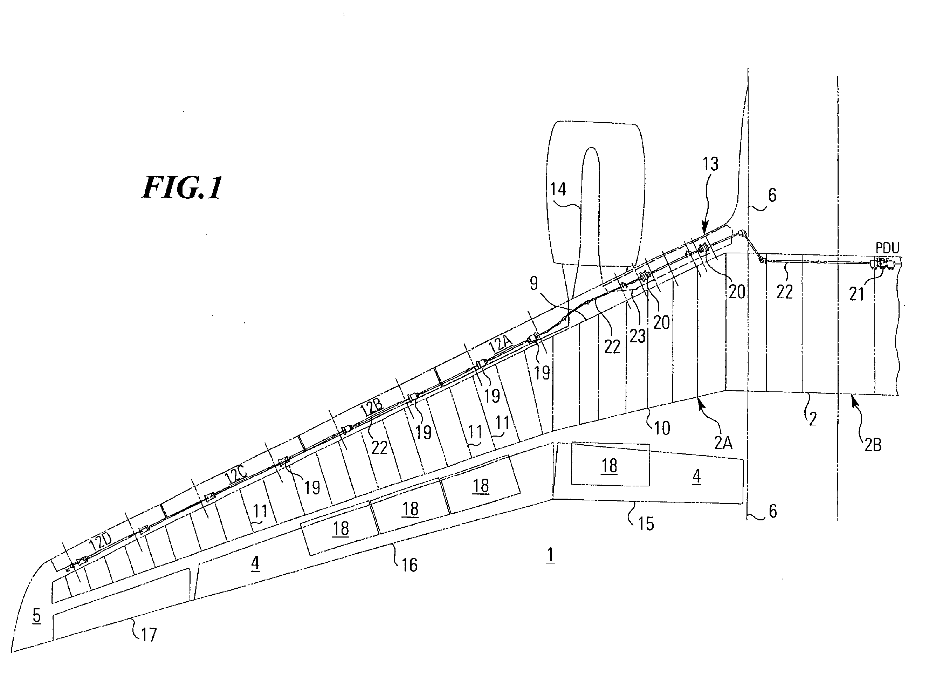

Fig. 1 shows a schematic top view of an airplane wing 1 according to the present invention. The airplane wing 1 according to the present invention has a wing box 2, a leading edge area 3 and a trailing edge 4, as well as wing tip area 5. The wing box 2 is the structural member of the wing. The left wing box 2A, the center wing box 2B and the right wing box 2C (not shown) are a continuous structural member from wing tip to wing tip. The fuselage 6 is attached to the center wing box 2B.

The wing box 2 also serves as the main fuel tank. The wing box 2 consists of an upper skin 7, a lower skin 8, a front spar 9, a rear spar 10 and a multitude of wing ribs 11.

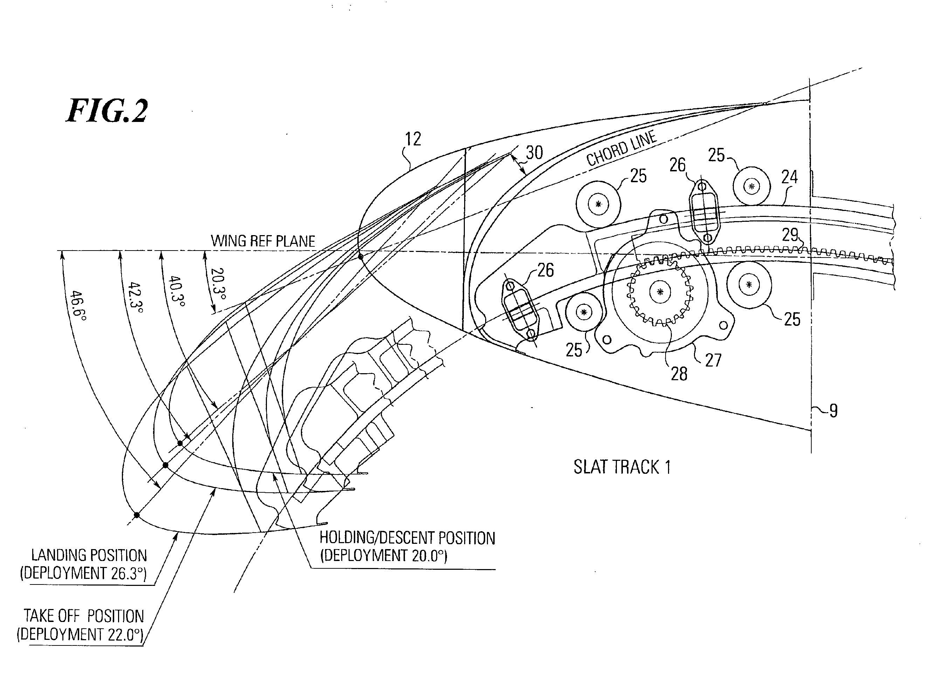

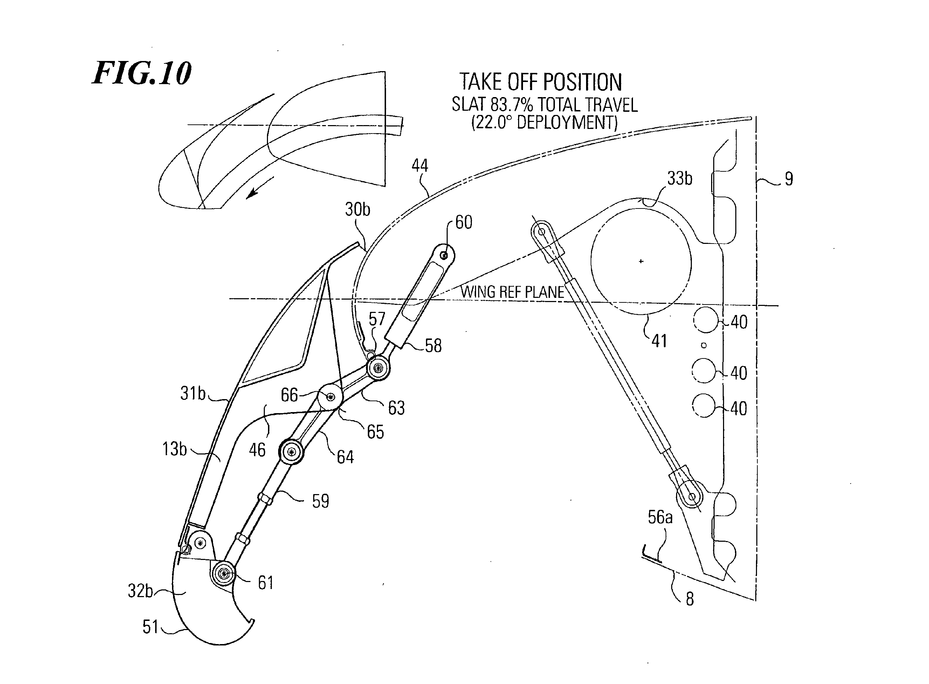

The leading edge area 3 comprises four slats 12a, 12b, 12c, 12d and a Krueger flap 13 inboard from an engine strut 14. A small wing area above the engine strut 14 connects the single Krueger flap 13 with the innermost of the four slats. The slats 12a to 12d and the Krueger flap 13 are connected to and driven by a common drive unit 21, as will be explained in more detail in relation to Figures 2 to 10.

The airplane wing 1 comprises on its trailing edge area 4 an inboard flap 15, as well as an outboard flap 16 and an outboard aileron 17. Further provided are spoilers 18 that serve as inflight airbrakes, as roll control devices and as lift dumpers after landing. It has to be noted, that the flaps, ailerons, spoilers and airbrakes of the trailing edge area 4 of the airplane wing 1 shown in Fig. 1 are only shown as an example and the trailing edge area 4 may have some other configurations.

The airplane wing of the present invention has at least one Krueger flap 13 and at least one, but probably more than one outboard slats 12 per side. The slats are driven by rotary actuation means 19, and the Krueger flap by other rotary actuation means 20. Both rotary actuation means are powered by a centrally located power drive unit (PDU) 21 and connected by a common drive shaft 22. This PDU 21 generally consists of dual redundant drive motors, reduction gearing, braking means and a control unit.

The outboard end of the Krueger flap 13, shown in its stowed position, shows a sloped trim line 23. This is the area where the folding bullnose is deleted and the Krueger panel shortened in order to clear the engine fan cowl and the engine exhaust when the Krueger deploys.

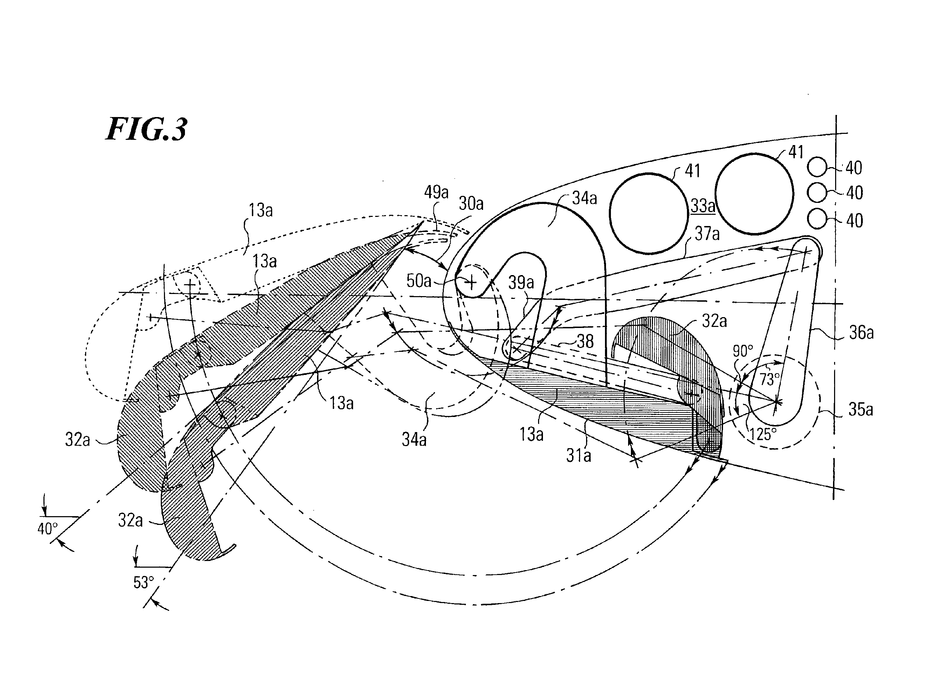

In order to understand the essence of this invention the operational characteristics of a typical slat and a typical Krueger flap have to be explained. The configuration of a typical slat arrangement and actuation is shown in Fig. 2, and a typical Krueger flap configuration follows in Fig. 3.

Fig. 2 shows a cross section of the leading edge area 3 of the outboard wing with a slat 12 of the wing 1 of the present invention, whereby the slat 12 is shown in four different positions in a composite picture. Two support and actuation locations per slat panel are assumed. The four slat positions are representative of a cruise position where the slat forms a smooth airfoil with the main wing, a maximum deployed position which is generally used for landings and two intermediate positions that may represent two take-off settings, or an "airplane hold" position and one take-off position.

The slat 12 is mounted to a circular arc track 24 (in two spanwise locations), the track having typically a "hat" cross section. The track 24 is supported by two pairs of rollers 25 for vertical loads and side load pads or rollers 26. Actuation of the slats 12 is accomplished with a rotary actuation means 19. Fig. 2 shows a rack and pinion drive, which consists of a rotary actuator 27, the pinion 28 (a toothed gear) that is off to one side of the rotary actuator 27, and this pinion 28 engaging with a rack 29 (a circular arc shaped toothed bar) that is mounted between the lower two legs of the "hat" section shaped track 24.

The aerodynamically significant angles of the slat 12 are the slat chord angle in the stowed position and slat chord angles in the take-off and landing positions. The slat chord angles in the slat deployed positions are obviously the sum of the "slat stowed" chord angle and the slat deployment angles. The slat chord line, which is used to measure the slat chord angle is defined by a line connecting the slat trailing edge with a leading edge tangent line normal to the chord line. A typical slat chord angle on an inboard wing is 25° to 30° and around 10° on an outboard slat. Therefore the inboard slat chord angles in a typical take-off setting of 16° to 20° range from 41° to 50°. For landing the optimum slat deflection angles range from 25° to 32°, which results in slat chord angles of 50° to 62°. The optimum chord angles of the deployed Krueger that replaces the inboard slat are expected to be somewhat higher.

Fig. 3 shows a cross section of the leading edge area 3 of the inboard wing with a first embodiment of a Krueger flap 13a of the airplane wing 1 according to the present invention. The objective for this Krueger design was to duplicate as closely as possible the geometric parameters of an inboard slat, i. e. the size of the gap 30a relative to the fixed wing leading edge and the slat chord droop angles.

The Krueger flap 13a is shown in four different positions in a composite picture. This Krueger configuration has only two usable deployed configurations: take-off and landing. But a second take-off or a hold/descent position could be provided with some actuation changes. The dead center position is not meant for use.

At least three hinge supports and two actuation locations per Krueger panel are necessary.
The slave linkage of this Fig. 3 concept is very simple and makes it easy to understand the motions of the Krueger flap 13a.

The Krueger flap 13a consists of a Krueger panel 31a and a folding bullnose 32a. The Krueger panel 31a is pivotally attached to the fixed leading edge rib 33a at its forward end with a goose neck shaped hinge fitting 34a. The bullnose 32a is pivotally attached to the aft end of the Krueger panel 31a, e.g. in spanwise locations that coincide with the linkage and some additional hinges at the panel ends and in the middle of the panel. The actuation of the Krueger panel comes from an actuation means 20 that consists of a rotary actuator 35a with a drive arm 36a. The drive arm 36a is connected with the hinge fitting 34a through a drive link 37a. The rotation of the folding bullnose 32a relative to the Krueger panel 31a is controlled by a slave link 38 that connects the bullnose 32a with an extension 39a of the drive link 37a. As was mentioned earlier, the bullnose and the bullnose slave linkage has to be designed so that the upper contour of the Krueger panel and bullnose form a smooth upper aerodynamic surface for the aerodynamic important positions: take-off and landing. A second take-off position or an "airplane hold" position is feasible.

The assumed requirement for a large slot and shallow Krueger deployment angles makes it difficult to find a hinge point 50a for the Krueger panel. The pivot shown is high and far forward inside the wing leading edge. This geometry makes the Krueger hinge fitting cut into the lower skin of the wing near the wing leading edge. The local slots in the wing skin are closed in cruise by two actuation covers 49a.

The reference slat used for the Krueger flow of Fig. 3 is not shown and has the following characteristics. It reaches its take-off position at an assumed 16.4° deployment angle and its landing position at an assumed 28°. The slat deployment angle is proportional to the actuator rotation, the Krueger flap actuation has to match this relationship in relative terms. So, if 28° of slat deployment is 100% of actuator rotation, the take-off position is then around 58% of the total actuator stroke. The Krueger flap has to match this relationship if it wants to match similar chord droop angles at take-off and landing. This relationship is illustrated in the following table 1:

**Table 1**

| | Krueger flap | | | % Deploym. | Slat | |
|---|---|---|---|---|---|---|
| | Drive | Panel | Chord | | Panel | Chord |
| Stowed | 0° | 0° | - | 0 | 0° | 25° |
| Take-off | 73° | 133° | 40° | 58,4 | 16,4° | 41,4° |
| Over center | 90° | 147,5° | 25° | 72 | 20° | 45° |
| Landing | 125° | 120,5° | 53° | 100 | 28° | 53° |

The slat to Krueger flap angular relationship can e.g. be changed by changing the length and the clocking of the Krueger drive arm, or by changing the location of the respective rotation axis.

The bullnose slave linkage of Fig. 3 has one slight flaw in as much as it is dependent on the two spanwise actuation locations and does not allow for more than the two spanwise bullnose slave actuation locations. But when only two bullnose slave links are required, it is a perfect and simple solution.

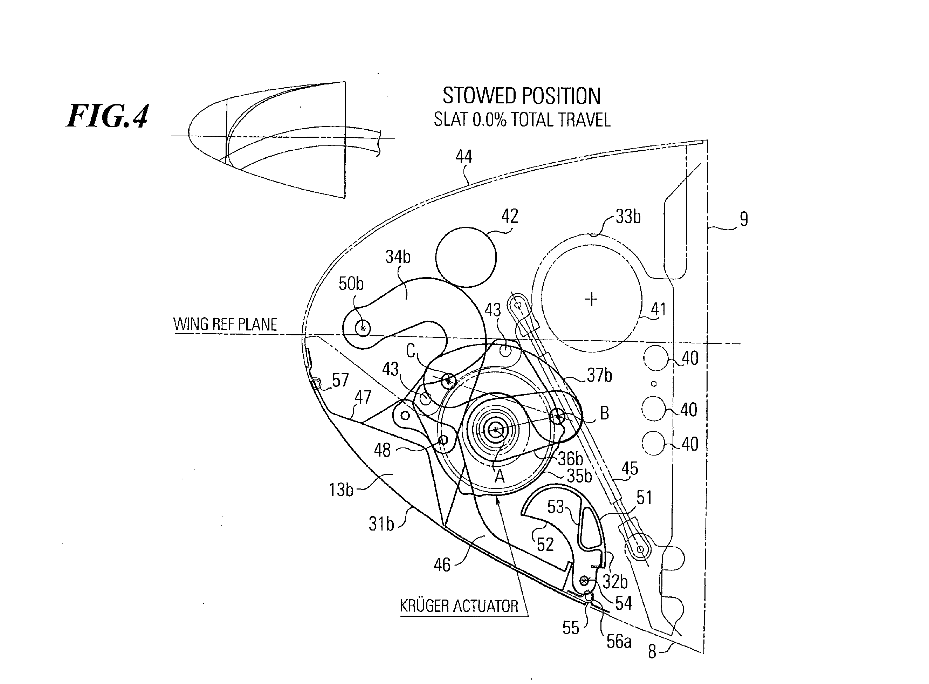

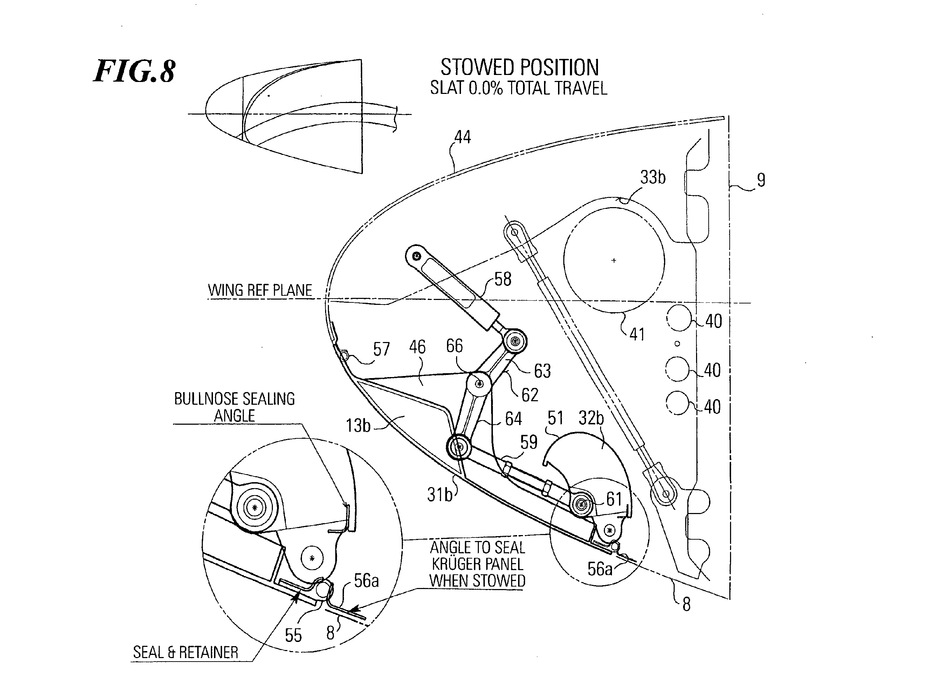

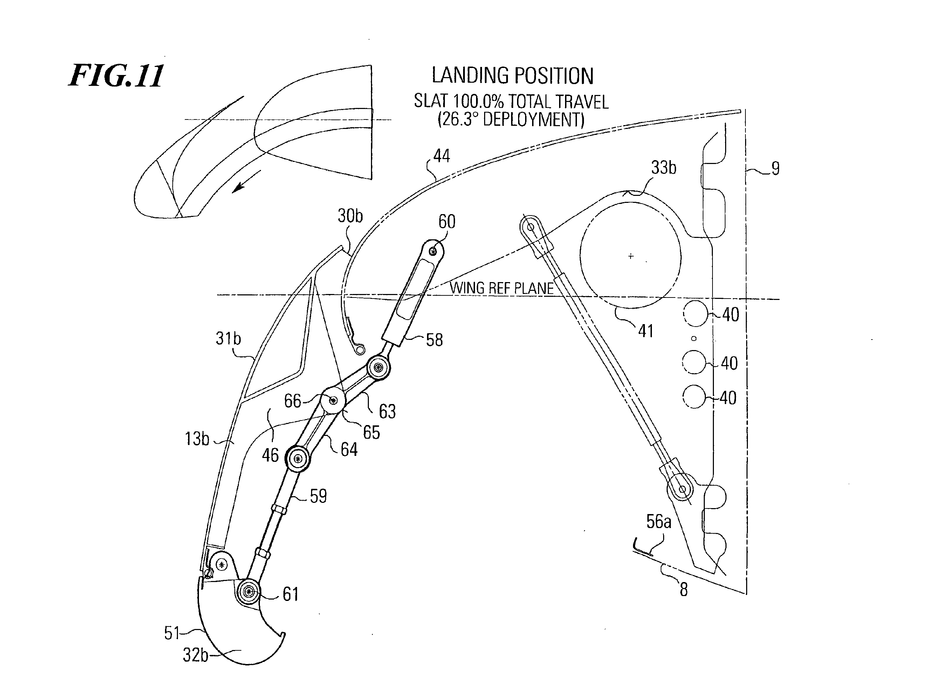

Figs. 4 to 11: A second Krueger configuration is shown that has different aerodynamic inputs. The Krueger deployment angles are considerably steeper and the gaps 30b between Krueger trailing edge and fixed wing leading edge are smaller than in the first configuration. Also, three different deployed positions are shown, a hold/descent position, a take-off position and the landing position. The hold/descent position could also be a second take-off position, if the dead center position is moved in between the first two deployed positions. Another difference with the first Krueger configuration is in the concept of the bullnose slave mechanism, which is designed independent of the main Krueger actuation and therefore allows to have more than two bullnose slave mechanisms per Krueger panel. This slave link mechanism is shown in four different positions in Figs. 8 to 11.

Because the Krueger hinge of the second Krueger configuration is smaller, it was possible to move the Krueger actuation away from the front spar and in between the hinge fitting and the somewhat smaller bullnose. This improves the accessibility situation along the forward face of the front spar and leaves more room for the bleed air duct and a ventilation hole through the leading edge rib. It is probably possible to use the simple slave linkage of the first Krueger configuration on this second configuration as well (not shown).

Figures 4 to 11 show a cross section of the leading edge area 3 at the second embodiment of a Krueger flap 13b of the airplane wing 1 according to the present invention, whereby the Krueger flap 13b is shown in different positions in the different drawings. Particularly, Figures 4 to 7 show the drive mechanism connecting the rotary actuator 35b and the Krueger flap 13b, whereby Figures 8 to 11 show the slave drive mechanism connecting the leading edge rib 33b with the bullnose 32b of the Krueger flap 13b.

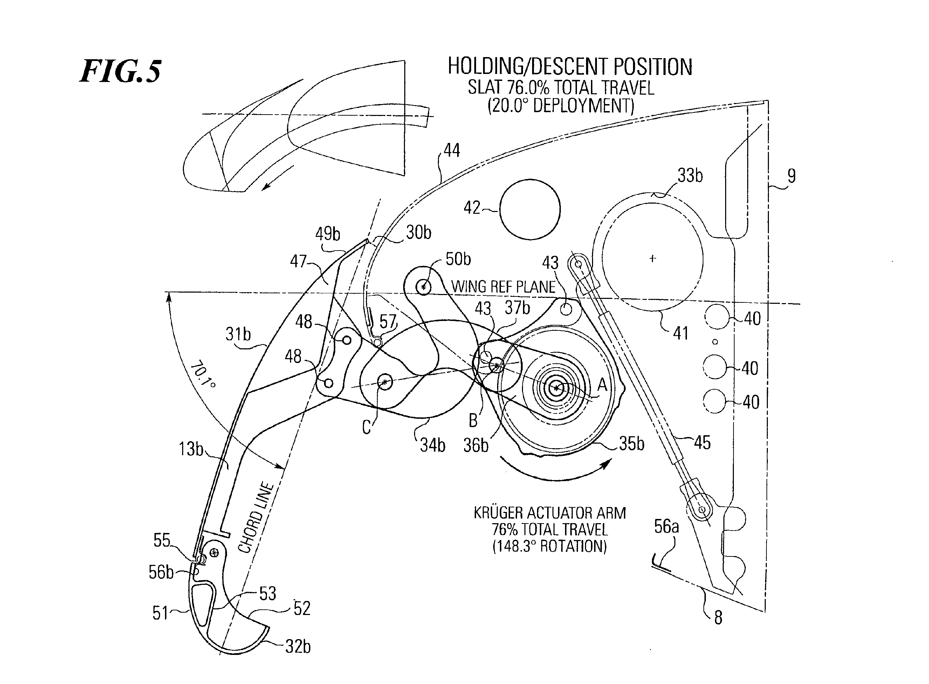

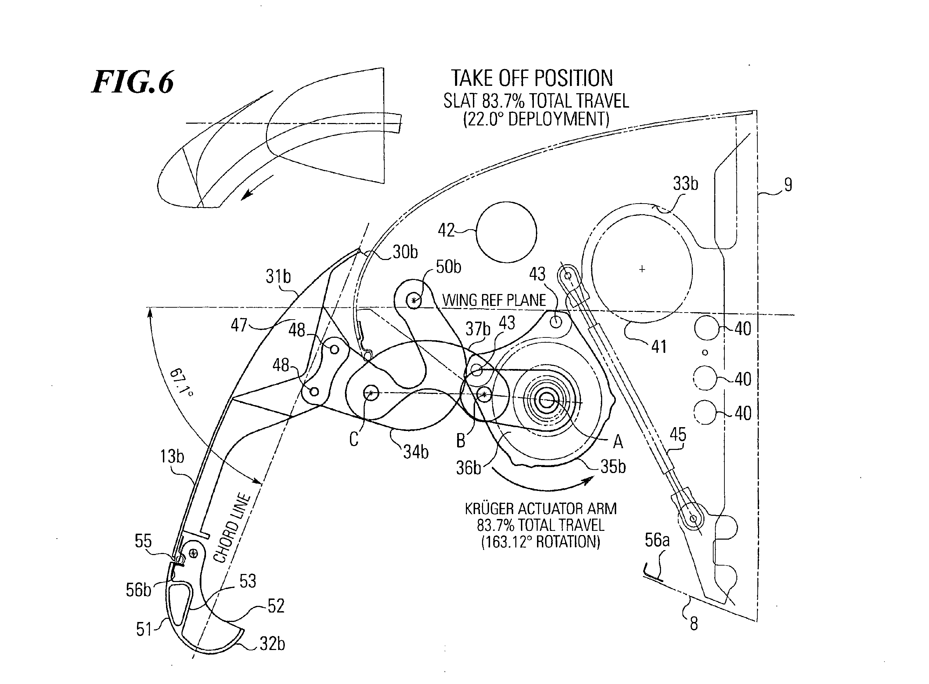

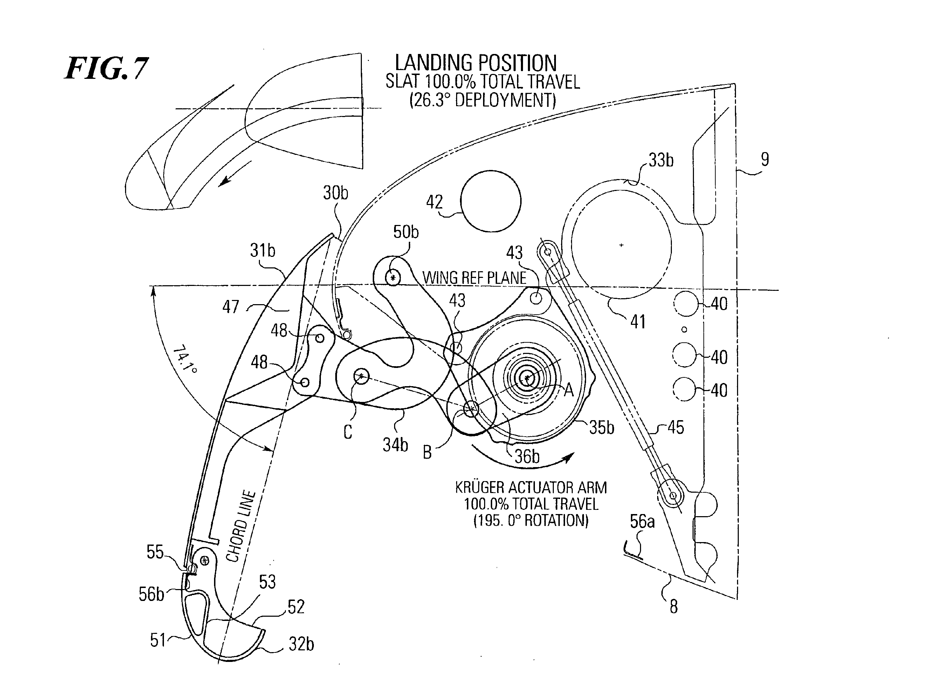

Generally, the present invention proposes to drive the slats 12 and a Krueger flap 13 of an airplane wing 1 from one centrally located power drive unit (PDU) 21 through a permanently engaged drive shaft system 22. In order to synchronize the opposing movements of the slats 12 and the Krueger flap 13, a flap drive mechanism is proposed which drives the Krueger flap 13 starting from the normal flight position (cruise, Fig. 4) through an unusable landing position before reaching the three desired positions. The airplane "hold/descent" position (Fig. 5) is reached some ways before the drive linkage reaches dead center, the take-off position (Fig. 6) is just a small fraction of an angle before dead center and the landing position (Fig. 7) is reached at the end of the stroke. In this way, synchronization with the movement of the slats 12 can be achieved, since the slats 12 when starting from the normal flight position, goes through a "hold/descent" position, a take-off position and at last to the landing position in a known manner. So the over center Krueger drive makes the Krueger motion compatible with slat motion and therefore allows a common synchronized actuation system.

Figures 4 to 7 show flap drive mechanism for driving the Krueger flap 13b according to the present invention. Figure 4 hereby shows the Krueger flap 13b in the normal flight position or cruise position, in which the Krueger flap 13b is fully retracted into the leading edge of the airplane wing 1. The rotary actuating means 20 with the rotation axis A is located in an axially mid and vertically lower position within the cavity of the leading edge of the airplane wing 1. This arrangement leaves enough room for all controls and electrical runs 40 to be routed close to the neutral axis of the wing for lowest stretch due to wing bending in front of the front spar 9. Thus, there is ample room within the front part of the airplane wing for a bleed airduct 41 in the upper part of the cavity and to provide an additional lightening hole 42 in the leading edge rib 33b for ventilation. The upper part of the leading edge is formed by a fixed leading edge skin 44.

The leading edge ribs 33b support the fixed leading edge skin or panels 44 and the rotary actuation means 20 via two corresponding connection lugs 43. Further, each leading edge rib 33b is braced off the lower end of a front spar 9 with a brace rod 45.

The Krueger flap 13b comprises a Krueger panel 31b, one or more Krueger ribs 46 and a spanwise Krueger beam 47 that stiffens the panel for bending and torsional loads. The Krueger panel 31b is hinged off the leading edge rib 33b with a Krueger hinge fitting 34b having the shape of a goose neck. The Krueger hinge fitting 34b is hereby connected to a front part of the leading edge rib 33 by means of a Krueger flap hinge 50b and the other end of the goose neck is connected to the Krueger rib 46 with bolts 48. The Krueger flap 13b is driven and actuated by two drive mechanisms per flap. Each drive mechanism comprises a drive arm 36b connected to the rotary actuator 35b and a drive link 37b hingedly connected to the drive arm 36b by means of a hinge B and to the Krueger hinge fitting 34b by means of a hinge C. In the normal position or the cruise position, the flap drive mechanism is folded as shown in Fig. 4.

The Krueger flap 13b comprises a folding bullnose 32b, with a bullnose panel 51 that has the shape of a bullnose, with several bullnose ribs 52 and a spanwise beam 53 for bending and torsional stiffness. At the aft end of the bullnose 32b and the Krueger panel 31b is a hinge 54 that rotatably connects the two parts. The unfolding of the bullnose 32b during Krueger deployment is slave linked from the wing leading edge rib in a three part mechanism which is explained in Fig. 8 to 11.

Between the Krueger flap panel 31b and the lower skin panel 8 of the airplane wing 1, seal means are provided, whereby, as shown in Fig. 4, a seal lip 55 is provided on the edge of the Krueger panel 31b, whereby the seal lip 55 in the normal position of the Krueger flap 13b contacts a corresponding skin plate or seal plate 56a connected to the wing lower skin panels 8. There is also a Krueger panel forward seal 57 on its stowed forward end. The seal 57 is attached to the lower end of the fixed leading edge. skin 44, with the Krueger panel end pushing against it.

Fig. 5 shows a similar cross section as Fig. 4, whereby the Krueger flap 13b is in a typical hold/descent position, in which the Krueger chord plane is at an angle of 70° relative to the wing reference plane (WRP). The rotary actuating means 20 is rotated by an angle of 148° as compared to the normal flight position shown in Fig. 4. The rotation axis of the Krueger flap 13b is the Krueger flap hinge 50b connecting the Krueger hinge fitting 34b and the leading edge rib 33b. The goose neck shape of the Krueger hinge fitting 34b allows to move the Krueger flap 13b around and upwards in relation to the fixed leading edge skin. The flap drive mechanism comprising the drive arm 36b and the upper drive link 37b actuates and drives the Krueger hinge fitting 34b upon the rotation of the rotary actuator 35b around the rotation axis A. Hereby, the hold/descent position is reached. From the hold/descent position the Krueger flap 13b moves into its take-off position as shown in Fig. 6 with a shallower Krueger chord plane angle of 67°. This take-off position is close to the dead center position of the mechanism. The dead center position is a position, in which the drive arm 36b and the drive link 37b are in straight alignment, i.e. the rotation axis A, the hinge connection B and the hinge connection C are on a straight line. The dead center position is a transitional position. The Krueger flap 13b has a maximum opening angle from the normal flight position. In the dead center position, the Krueger chord plane angle is 66° (not shown). Fig. 7 shows the Krueger flap in the landing position with a Krueger chord angle droop of 74,1°. This is the steepest Krueger position and corresponds to the maximum slat deployment angle of 26,3°. As can be seen in Fig. 5, 6, and 7, the position of the bullnose 32b relative to the Krueger flap panel 31b does not change noticeably between the "hold/descent", the take-off and the landing position. Also the seal between the seal lip 55 of the Krueger panel 31b and the corresponding seal skin plate 56b of the bullnose stays compressed to provide a good and effective seal, preventing any leakage from the pressure side (lower) to the suction side (upper) of the Krueger flap. Any leakage would cause loss in maximum lift.

The mechanism for driving the bullnose 32b is explained in Figs. 8 to 11. The tight seal between the bullnose 32b and the Krueger panel 31b provides an aerodynamically smooth lifting surface between the hold/descent and the landing position with no aerodynamic problem in the take-off position.

In the landing position shown in Fig. 7, the Krueger chord plane angle is 74° relative to the wing reference plane WRP, whereby the synchronized slat panel deflection is 26.3°. The corresponding rotation angle of the drive arm 36b of the actuator 35b from the stowed position is 195°. The following table 2 gives the various deflection angles and deployment percentages for the Krueger flap 13b and the slats 12 for the examples shown in Fig. 4 to 7.

**Table 2**

| | Krueger Flap | | % Deploy | Slat | |
|---|---|---|---|---|---|
| | Drive | Chord | | Panel | Chord |
| Stowed | 0° | - | 0 | 0° | 20,3° |
| Hold/Descent | 148,3° | 71,1° | 76 | 20° | 40,3° |
| Take-off | 163,1° | 67,1° | 83,7 | 22° | 42,3° |
| Landing | 195,0° | 74,1° | 100 | 26,3° | 46,6° |

It is to be noted, that the angle correlation between the Krueger flap 13b and the slat 12 can be changed and optimized by several means. One of the simplest ways is to retain the Krueger actuation configuration and to change the gear ratio of the rotary actuation means. Also the clocking between the slats 12 and the Krueger flaps 13b can be changed by varying the starting position of the Krueger drive arm.

Additional changes in the deployment angle relationship between the Krueger flap 13b and the slat 12 can be obtained by changing the construction of the Krueger flap drive mechanism. For example, in order to reduce both the take-off and the landing Krueger chord angles, to the length of the drive arm 36b of the Krueger flap drive mechanism has to be increased slightly. This also means that the Krueger flap drive mechanism will cut locally into the fixed leading edge and that a small local cover plate for this cutout has to be provided on the leading edge of the stowed Krueger panel 31b (the Krueger flap of Fig. 3 is such an example).

In this context it has to be noted that the outboard slats 12 have a span which is three to four times larger than the span of the inboard Krueger flap 13b, even though the inboard Krueger flap 13 is in front of a deeper airfoil section. Thus it is more important to optimize the slat positions than the Krueger positions for both the take-off and the landing in order to achieve the best overall airplane performance.

There is one more variation to be considered for synchronizing the outboard slats to the inboard Krueger flap between the stowed, the hold/descent, the take-off and the landing position. The preferred actuation system for the slat is a rack and pinion drive, which puts the slats angle deployment in a linear relation ship with the actuator rotation. However, the slat actuation may also employ rotary actuators with a drive arm and a drive link, similar to the Krueger drive mechanism, which makes the slat movement non-linear relative to the actuator rotation and opens up new slat Krueger relationships.

Figs. 8 to 11 respectively show the Krueger flap 13b in a normal flight position, hold/descent, the take-off position and the landing positions corresponding to Fig. 4 to 7, respectively. However, Fig. 8 to 11 show the slave drive mechanism for driving and unfolding the foldable bullnose 32b of the Krueger flap 13b upon the actuation of the Krueger flap 13b by the Krueger flap drive mechanism shown in and explained in relation to Fig. 4 to 7. As can be seen in Fig. 8, the bullnose 32b is folded up and forwarded in the normal flight position of the Krueger flap 13b. In the take-off, the hold/descent and the landing positions, the bullnose 32b forms a rounded leading edge of the Krueger flap 13b to provide an aerodynamically efficient structure. The drive mechanism of the bullnose 32b is not slave linked to the flap drive mechanism of the Krueger flap 13, as in the Fig. 3 Krueger configuration, but uses a bell crank mechanism that is grounded to the fixed structure of the leading edge rib 33b. In the example shown in Fig. 8 to 11, the drive mechanism for the bullnose comprises an upper link 58 which is connected by means of a hinge connection 60 to the leading edge rib 33b. Further comprised is a lower link 59 which is connected by means of a hinge connection 61 to the foldable bullnose 32b. The upper link 58 and the lower link 59 are respectively connected via a hinge connection to a bell crank 62. The bell crank 62 comprises an upper arm 63 and a lower arm 64 forming an angle with each other. The center point of the bell crank 62 is connected via a hinge connection 66 to the Krueger rib 46. The bullnose 32b is attached to the aft end of the Krueger panel 31b with a suitable number of hinges. As can be seen from the Figures, the slave drive mechanism for the bullnose 32b is independent from the Krueger flap drive mechanism so that the number of slave drive mechanisms for the bullnose is independent from the number of Krueger flap drive mechanisms per Krueger flap 13. Advantageously, two Krueger flap drive mechanisms per Krueger flap 13 are provided, whereby two or more drive mechanisms for the bullnose can be used.

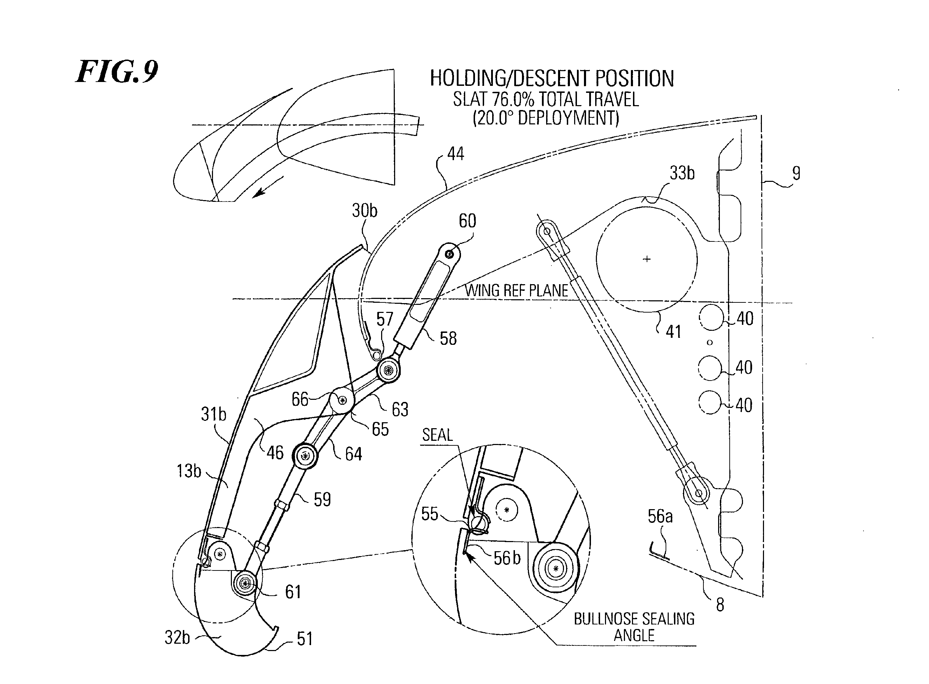

From Figs. 9, 10 and 11, which show the hold/descent, the take-off position and the landing position, respectively, it becomes clear that the bullnose is already unfolded in the hold/descent position and the relative positions of the bullnose 32b and the Krueger panel 31b do not change significantly between the hold/descent, the take-off and the landing position. Particularly, the seal means 55/56 between the bullnose panel 51 and the Krueger panel 31b remains compressed and sealed. Thus, the Krueger flap 13b provides an aerodynamically smooth lifting surface between the hold/descent and the landing positions.

The Krueger flap 13b shown in Fig. 4 to 11 is slotted (slot 30b) relative to the fixed leading edge of the airplane wing 1 for all transitional positions, but particularly for three high lift cases, namely the hold/descent, the take-off and the landing positions. If aerodynamic considerations for example call for a sealed Krueger position for take-off in order to improve the lift to drag ratio, this change could be arranged by changing the rotation point of the Krueger flap 13b, i.e. the Krueger flap hinge 50, and the length of the Krueger panel 31b (trim line of aft end, when deployed).

Further, the spanwise structural beam 47 of the Krueger flap 13b as shown in Fig. 4 to 11 is shaped to provide a good aerodynamic contour for the slot between the Krueger panel 31b and the fixed leading edge of the airplane wing.

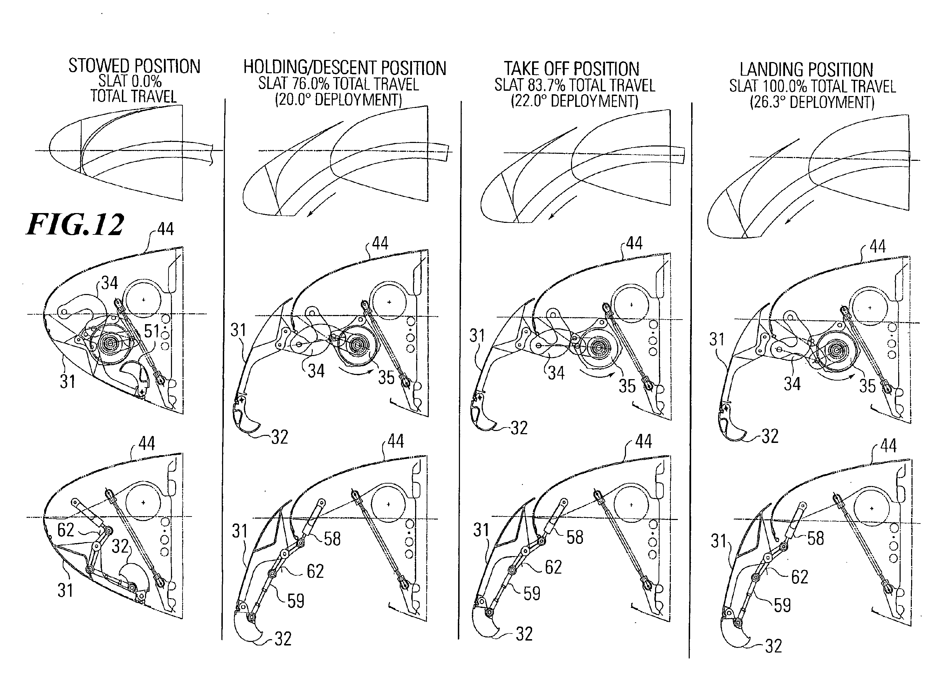

Fig. 12 is a pictorial summary of the slat and Krueger configurations as they move, synchronized by the common drive system, from the stowed to the three deployed positions. The top row shows the slat of Fig. 2 without the actuation. The middle row shows the Krueger of Figs. 4 to 7 with the actuation, but with the bullnose slave linkage deleted. The lower row shows the Krueger of Figs. 8 to 11 with bullnose slave linkage shown and the actuation deleted. This comparison shows among other things that the hold/descent and the take-off positions are quite closely related and that a common position may be possible at a slat deflection of 20° to 22°, or in between.

As a conclusion, the present invention proposes an airplane wing 1 for smaller twin engine airplanes with low wing and engines mounted in close relationship to the wing lower surface, whereby the airplane wing comprises outboard slats and a folding bullnose Krueger flap inboard. The motion between the slat and the Krueger flap between the take-off and the landing position is reversed. In order to be able to drive the slats and the Krueger flaps from a common center drive system to achieve synchronized and mechanically assured symmetrical motion, a reversal of take-off and landing positions on the Krueger drive mechanism is required. This is accomplished by letting the Krueger drive go from the hold/descent to the take-off position and through a dead center position into an over center position for landing. Clocking of the Krueger positions relative to the slat positions is easily accomplished and provides near optimum positions for slats and Krueger flaps for both take-off and landing.

## Claims

1. Airplane wing (1) with leading edge devices, said leading edge devices comprising one or more slats (12) and at least one Krueger flap (13a; 13b) per side, said one or more slats (12) and said at least one Krueger flap (13a; 13b) per side being driven by a common drive unit (21) between a normal flight position, a take-off position and a landing position, whereby a flap drive mechanism connects said Krueger flap and said common drive unit (21) so that upon actuation of said common drive unit (21) said Krueger flap (13a; 13b), when starting from said normal flight position, goes through said take-off position before reaching said landing position.

2. Airplane wing (1) according to claim 1,
**characterized in,**
**that** one Krueger flap (13a;13b) is provided inboard from an engine strut and two or more slats are provided outboards from said engine strut.

3. Airplane wing (1) according to claim 1 or 2,
**characterized in,**
**that** said Krueger flap (13a; 13b) is rotatably connected to said airplane wing (1) by means of two or more Krueger hinge fittings (34) located on a leading edge rib (33).

4. Airplane wing (1) according to claim 3,
**characterized in,**
**that** said flap drive mechanism comprises a drive arm (36) connected to a rotary actuator (35) and a drive link (37) hinged to said drive arm (36) and to the Krueger hinge fitting (34).

5. Airplane wing (1) according to claim 4,
**characterized in,**
**that** said Krueger flap (13), shortly before or after said take-off position, goes through a dead center position with a maximum panel rotation angle before reaching said landing position.

6. Airplane wing (1) according to claim 5,
**characterized in,**
**that** in said dead center position, the rotation axis (A) of said rotary actuator (35) , the joint (B) of said drive arm (36) and said drive link (37) and the joint (C) of said drive link (37) with said Krueger hinge fitting lie on a straight line.

7. Airplane wing (1) according to one of said claims 1 to 6,
**characterized in,**
**that** said Krueger flap (13a; 13b) comprises a foldable bull-nose (32) which is in a folded position during said normal flight position of said Krueger flap and the rotation of which relative to a Krueger panel is controlled by a slave drive mechanism.

8. Airplane wing (1) according to claim 7,
**characterized in,**
**that** the slave drive mechanism is connected to and actuated by the flap drive mechanism from a forward extension (39) on the drive link (37a).

9. Airplane wing (1) according to claim 8,
**characterized in,**
**that** said slave drive mechanism actuates the bull-nose (32) so that the positions of said bull-nose relative to the Krueger panel are the same for take-off and landing.

10. Airplane wing (1) according to claim 7,
**characterized in,**
**that** the slave drive mechanism connects the bull-nose with a fixed leading edge structure of the wing (1).

11. Airplane wing (1) according to claim 10,
**characterized in,**
**that** said slave drive mechanism actuates said bull-nose so that the position of said bull-nose remains essentially unchanged when the Krueger flap is moved from the take-off into the landing position.

12. Airplane wing (1) according to claim 11,
**characterized in,**
**that** said slave drive mechanism comprises an upper link (58) hinged to a leading edge rib (33b) of a fixed leading edge structure and a lower link (59) hinged to said bull-nose, said upper link (58) and said lower link (59) being hinged to a bell crank (62) hinged to said Krueger flap.

13. Airplane wing (1) according to claim 11 or 12,
**characterized in,**
**that** said bell crank (62) comprises a first arm (63) and a second arm (64) forming an angle.
